Europäisches Patentamt

European Patent Office

Office européen des brevets

(19)

(11) Publication number: **0 112 143**
**A1**

# (12) EUROPEAN PATENT APPLICATION

(21) Application number: **83307535.1**

(22) Date of filing: **12.12.83**

(51) Int. Cl.³: **G 01 P 3/486**

(30) Priority: **10.12.82 US 448458**

(43) Date of publication of application:
**27.06.84 Bulletin 84/26**

(84) Designated Contracting States:
**BE DE FR GB NL SE**

(71) Applicant: **Ford Aerospace & Communications
Corporation
3939 Fabian Way
Palo Alto, Cal. 94303(US)**

(72) Inventor: **Boss, Harold Oliver
1200 Key West
Corona Del Mar California 92625(US)**

(74) Representative: **Messulam, Alec Moses
A. Messulam & Co. 24 Broadway
Leigh on Sea Essex SS9 1BN(GB)**

(54) Rotation sensor for gyroscopically mounted rotor.

(57) The invention proposes remote rotation sensing of a gyroscopically mounted rotor (40) by utilizing a single fiber optic (50) between a light reflector (35) on the rotor and a light source/light detector (64,68). The single fiber optic (50) provides transmission for both source light energy in a first direction and reflected light energy in the opposite direction. A second embodiment provides a discontinuity (51,53) in the fiber optic to allow for relative movement.

FIG. 1.

EP 0 112 143 A1

## ROTATION SENSOR FOR GYROSCOPICALLY MOUNTED ROTOR

The present invention is directed to the field of remote speed sensing and more specifically to the area of monitoring the rate of rotation of a gyroscopically mounted rotor.

Target tracking seekers systems, as employed in missiles, normally utilize at least one gyroscopically rotating scan member. The rate of rotation must be held constant so that a predetermined scan pattern is continuously maintained. In U.S. Patent 4,009,393, a scanner is described which employs separately driven counter-rotating scan elements. One of the scan elements is driven by a rotating shaft mounted in a relatively fixed orientation. A tachometer is attached to the driven shaft in order to monitor the rotational speed thereof. The tachometer employs sensing coils positioned adjacent the rotational path of an extended shaft element and electrical wires carry the signals from the coils to an associated control circuit. Such a system is adequate where a rotating shaft rotates on a relatively stationary axis. However, if all the rotating elements are movable with three degrees of freedom, such as the elements which make up the scanning system described in copending European Application No. 82305515.7, then a conventional tachometer would be impractical. The rigidity and mass of electrical wire connections between a gimbal mounted rotation sensor and an associated circuit would cause additional loading to the gimbal rings and degrade the responsiveness of the tracker.

According to the invention we provide a system for monitoring rotation of a gyroscopic rotor characterised by a light source remotely mounted with respect to said rotor, light reflecting means on said rotor, a light detector mounted adjacent said light source; fiber optic means mounted to transmit light from said light source to said light reflecting means and to transmit reflected light from said reflecting means to said light detector, wherein said fiber optics means has one end attached to said remote location adjacent said light source and said light detector and a second end optically exposed to said reflecting means.

The fiber optic means may be a single fiber optic routed through the bearing centres of inner and outer gimbal rings in order to minimise loading and imbalance to the highly sensitive gimballed elements.

The invention will now be described with reference to the accompanying drawings, in which:

Figure 1 is an elevational view of a first embodiment of the present invention;

Figure 2 is a cross-sectional view along the line II-II of Figure 1 illustrating the routing of the fiber optic in the first embodiment;

Figure 3 illustrates a second embodiment of the present invention employing a discontinuous fiber optic element; and

Figure 4 is a detailed drawing of the lens formed at opposing ends of the discontinuous element in the second embodiment.

A gyroscope 10 includes relatively fixed reference support 12 from which a pair of rigid arms 14 and 16 extend. At the outer end of each of the arms 14 and 16, concentric apertures are formed for containing concentric outer gimbal ring bearings 18 and 20 respectively. An outer gimbal ring 22 is pivotally mounted within the bearings 18 and 20 for low friction movement about an axis defined by the bearings 18 and 20.

- 3 -

The outer gimbal ring 22 contains oppositely disposed inner gimbal support arms 24 and 26 for containing concentric inner gimbal bearings 32 and 34, respectively. An inner gimbal 36 is pivotally mounted within bearings 32 and 34 for low friction movement about an axis which is orthogonal to the outer gimbal bearing axis.

The inner gimbal 36 provides a low friction mount for a rotor shaft 38 that rotates about an axis which is orthogonal to and intersects both the inner and outer gimbal axes. The rotor shaft 38 supports a gyroscopic rotor 40, which is driven in a conventional manner (not shown) at a controlled speed.

A key element in controlling the speed of rotation of a gyroscopic rotor is a sensor for monitoring the actual speed of rotation of the rotor. The presently described embodiment utilizes a remote sensing technique that employs a transmission medium, between the rotor shaft and remotely placed sensing elements that has a very low mass and low resistance to gimbal movement within the gyroscope 10.

The transmission medium employed in the present invention is a single fiber optic 50. The fiber optic 50 is routed from a stationary platform, such as rigid arm 14, through an aperture 21 concentrically located with respect to an outer gimbal bearing 18. The fiber optic 50 extends outwardly through an aperture 30, formed in gimbal ring 22, and then through the inner gimbal bearing 32, so as to have an end 52 adjacent the rotor shaft 38. The end 52 is fixed relative to the outer gimbal ring 22 but, by virtue of its alignment with the axis of inner gimbal bearing 32, maintains its functional relationship with the rotor irrespective of rotation of the inner gimbal ring relative to the outer gimbal ring.

A retroreflecting mirrored surface 35 is formed on the rotor shaft 38 so that light transmitted through the fiber optic 50 and emitted from the end 52 towards the rotor shaft 38 will be reflected back into the fiber optic at least once per each revolution. Of course, several types of retroreflectors may be employed on the rotor shaft 38. The flat mirror surface 35 is but one of several contrasting surface configurations. Other configurations may include a miniature corner reflector mounted on the circular surface so as to pass near to the end 52 once for each revolution, or an aperture formed through the shaft 38 so that once per each revolution, it is in alignment with the fiber optic 50 and will create high absorption rather than high reflectance of the light emanating from the end 52.

The secured end 54 of the fiber optic 50 is rigidly mounted with respect to a lens system comprising lenses 62 and 66, which are disposed so as to have a common focal point "P" coincident with the end surface 54 of the fiber optic 50. The lens 62 is associated with a light source 64 and lens 66 is associated with light detector 68.

In operation, light source 64 emits light energy radiation towards lens 62. The light energy is focused by the lens 62 at P onto the end 54 of the fiber optic 50. The light energy is transmitted through the fiber optic 50; is emitted from the end 52; and is either absorbed or relected from the shaft 38 depending upon the instantaneous rotational position of the shaft. Once for each revolution, a light energy pulse is retroreflected back through the end 52 of the fiber optic 50 and is emitted from the end 54. Such a reflected light energy pulse is focused by the lens 66 onto the light detector 68 which responsively provides an electrical output to an associated circuit for monitoring the speed of rotation of the gyroscopic rotor.

Due to the low mass of the fiber optic 50, the resistance to torque and balance effects on this miniaturized gimballed unit are negligible.

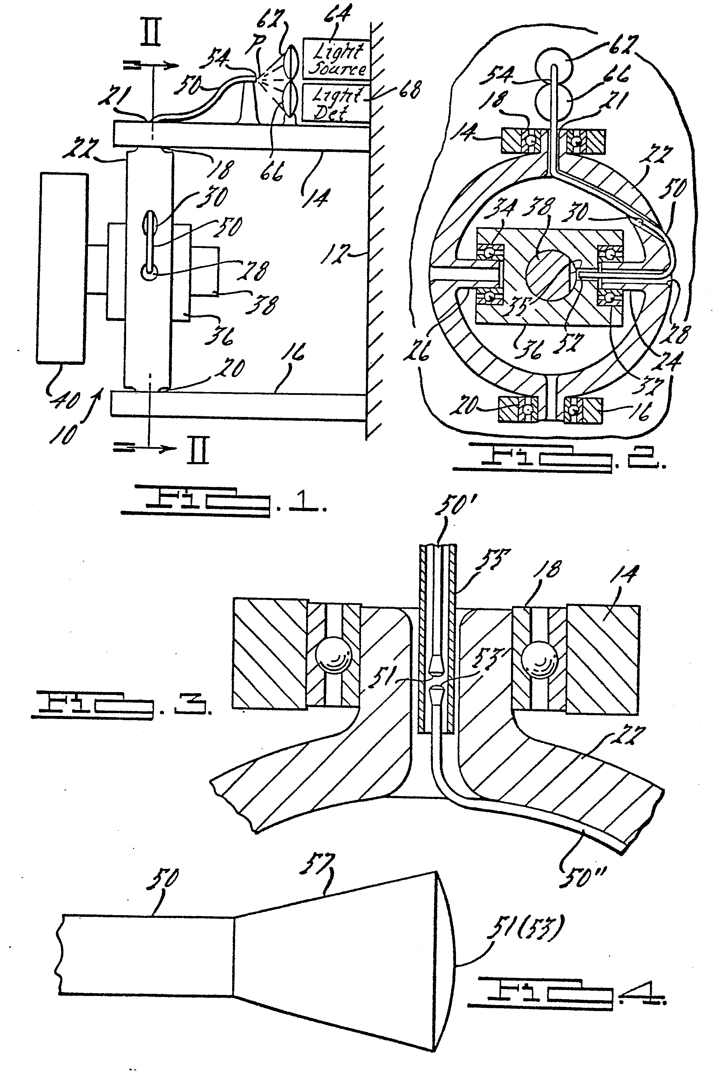

An alternative embodiment of the invention is shown in Figures 3 and 4 and may be considered in those instances wherein even the low torque resistance offered by the fiber optic 50 of the first embodiment may influence or hinder movement of the gimbal rings.

The second embodiment utilizes a discontinuous fiber optic strand which is shown in Figure 3 as a first section 50' and a second section 50''. The discontinuous end portions of sections 50' and 50'' are contained within a non-rotating conduit tube 55 which provides alignment between the discontinuous end portions. In this second embodiment, the end portions to be oppositely disposed within the conduit 55 are each formed to have an enlarged spherical surface conically joined to the original diameter of the fiber optic. The spherical ends 51 and 53 are formed by melting the fiber optic material within a spherical end mould and, when properly formed, function as optical lenses to focus transmitted light energy onto each other.

In this second embodiment, the fiber optic 50 is maintained stationary while the fiber optic 50'' is movable within the outer gimbal ring 22, within the outer gimbal bearing 18. Due to the discontinuous nature of the fiber, the already low torque resistance of the speed sensing system is reduced even further. Light will still be transmitted, as in the first embodiment.

## CLAIMS

1. A system for monitoring rotation of a gyroscopic rotor characterised by a light source (64) remotely mounted with respect to said rotor (40); light reflecting means (35) on said rotor, a light detector (68) mounted adjacent said light source; fiber optic means (50) mounted to transmit light from said light source (64) to said light reflecting means (35) and to transmit reflected light from said reflecting means (35) to said light detector (68), wherein said fiber optics means (50) has one end (54) attached to said remote location adjacent said light source and said light detector and a second end (52) optically exposed to said reflecting means.

2. A system as in Claim 1 characterised in that the fiber optic means (50) is of single fiber section.

3. A system as in Claim 1 or Claim 2, including a gimbal having an outer mounting ring (22) pivotably mounted on support means (12) by low friction bearings (18) and an inner mounting ring pivotally mounted on the outer mounting ring by inner low friction bearings (32) orthogonal to the outer bearings, and characterised in that said fiber optic is routed through the axis of one of the outer bearings (18) so as to provide minimal loading and influence to said rotor.

4. A system as claimed in Claim 3, wherein the second end of the fiber optic means extends through one of the inner bearings (32) and is aligned with the light reflecting means so that the fiber optic means is not twisted upon movement of the inner mounting ring relative to the outer mounting ring.

5.     A system as in Claim 3 or Claim 4, characterised in that said fiber optic means is discontinuous at said outer bearing (18), the end portions (51,53) of the fiber optic means at the discontinuity being aligned with the axis of said outer bearing so that light transmission between the end portions (51,53) at the discontinuity is unaffected by rotation of the outer mounting ring relative to the support means.

6.     A system as in Claim 5, characterised in that said end portions (51,53) at the discontinuity are formed as lenses so as to focus transmitted light from each portion of the fiber optic means onto the other.

7.     A system as in any one of Claims 3 to 6 characterised in that said fiber optic means is routed through the centres of orthogonal bearings (18,32).

8.     A system as in any one of the preceding Claims characterised in that said light source (64) includes a light emitting element and a lens (62) for focusing said emitted light onto said one end (54) of said fiber optic means.

9.     A system as in Claim 8, characterised in that said light detector means (68) includes a light sensitive element that outputs an electrical signal as a function of the intensity of light detected thereby and a lens (60) for focusing the light emitted from said one end (54) on to said light sensitive element.

10.    A system as in any one of the preceding claims characterised in that said light reflecting means (35) includes a retroreflective element (35) on the rotor (38,40) so as to rotate past said second end (52) of said fiber optic means (50).

11. A system as in Claim 5 or Claim 6, characterised in that said end portions (51,53) of said fiber optic at said discontinuity are located within a hollow conduit (55) to maintain alignment thereof.

12. A system as in Claim 11, characterised in that said hollow conduit (55) is of sufficient dimension to allow one end portion (53) of said fiber optic means to rotate with respect to the other end portion (51) while maintaining said alignment.

FIG. 1.

FIG. 2.

FIG. 3.

FIG. 4.

0112143

Application number

EP  83 30 7535

## EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 954 339 (ATWOOD et al.) <br><br> *Column 2, lines 38-49; figures 1,2* | 1,6,8, 10 | G 01 P   3/486 |
| A | EP-A-0 022 728 (MERLIN GERIN) <br> *Page 3, line 34 - page 5, line 8; figure 1* | 1,2,10 | |
| A | FR-A-2 496 281 (KOKUSAI DENSHIN DENWA CO. LTD.) <br> *Page 4, line 29 - page 5, line 11; figure 3a* | 2,5-7, 11 | |
| A | CH-A- 390 733 (OERLIKON) <br> *Page 2, lines 18-28; figures 1-3* | 3,4 | |
| A | DE-A-3 101 378 (SEL) <br> *Page 5, lines 11-18; figure 1* | 6 | TECHNICAL FIELDS SEARCHED (Int. Cl. ³) <br><br> G 01 P <br> F 41 G <br> G 01 C <br> G 02 B |
| A | US-A-2 983 556 (COAN) <br> *Column 3, lines 30-51; figure 2* | 1,10 | |

The present search report has been drawn up for all claims

| Place of search | Date of completion of the search | Examiner |
|---|---|---|
| THE HAGUE | 21-03-1984 | HANSEN P. |